# EUROPÄISCHE PATENTSCHRIFT

(11) **EP 4 072 897 B1**
(45) Veröffentlichungstag und Bekanntmachung des Hinweises auf die Patenterteilung: **25.12.2024**
(21) Anmeldenummer: 20824196.8
(22) Anmeldetag: 09.12.2020
(51) Int. Cl.: B60N 2/015, B60N 2/02, B60N 2/12, B60N 2/60, B60N 2/30, B60N 2/005

(54) **FAHRZEUGSITZ**
VEHICLE SEAT
SIÈGE DE VÉHICULE

(30) Priorität: 10.12.2019 DE 102019133619; 20.04.2020 DE 102020110623
(43) Veröffentlichungstag der Anmeldung: 19.10.2022
(73) Patentinhaber: Adient US LLC, Plymouth, MI 48170 (US)
(72) Erfinder: DILL, Thomas, 67699 Heiligenmoschel (DE); ENNS, Viktor, 67663 Kaiserslautern (DE); WOLF, Christian, 67811 Dielkirchen (DE); WROBEL, Darius, 67678 Mehlingen (DE)
(74) Vertreter: Liedhegener, Ralf
(86) Internationale Anmeldenummer: PCT/EP2020/085320
(87) Internationale Veröffentlichungsnummer: WO 2021/116190

(56) Entgegenhaltungen:
- JP-A- S6 094 840
- US-A1- 2016 318 424

## Beschreibung

Die Erfindung betrifft einen Fahrzeugsitz, insbesondere Kraftfahrzeugsitz, mit einem Sitzteil, einer Lehne, und einer Kinematik zur Überführung des Fahrzeugsitzes von einer zur Personenbeförderung geeigneten Gebrauchsstellung in eine Nichtgebrauchsstellung, insbesondere in eine den Einstieg in eine hintere Sitzreihe erleichternde Einstiegsstellung, wobei der Fahrzeugsitz mittels einer Antriebsvorrichtung von der Gebrauchsstellung in die Nichtgebrauchsstellung und umgekehrt (das heißt von der Nichtgebrauchsstellung zurück in die Gebrauchsstellung) überführbar ist, wobei der Fahrzeugsitz zur Sicherung in der Gebrauchsstellung einen hinteren Fuß mit einer Verriegelungsvorrichtung aufweist, welche mit einem Gegenelement verriegelbar ist.

### Stand der Technik

Aus der DE 10 2008 050 468 B3 ist ein Fahrzeugsitz bekannt, der von wenigstens einer zur Personenbeförderung geeigneten Gebrauchsstellung in eine vorgeschwenkte Einstiegsstellung und alternativ in eine abgesenkte Bodenstellung überführbar ist. Der Fahrzeugsitz umfasst eine Basis, eine Schwinge, die an einem an der Basis angebrachten vorderen Fuß angelenkt ist, einen Sitzkissenträger, von dem hinten ein Arm absteht, an dessen Ende ein Gelenk angeordnet ist, zwei Lenker, die wenigstens mittelbar an dem an der Basis angebrachten vorderen Fuß angelenkt sind, einen hinteren Fuß, der an den Lenkern angelenkt ist und mit der Basis lösbar verriegelt ist, und eine Lehne, die mittels wenigstens eines verriegelbaren Beschlags um eine Lehnenschwenkachse schwenkbar am hinteren Fuß angelenkt ist. Der Sitzkissenträger ist mittels des versetzt zur Lehnenschwenkachse mit dazu paralleler Schwenkachse angeordneten Gelenks an der Lehne angelenkt, wobei beim Übergang des Fahrzeugsitzes in die Einstiegsstellung der hintere Fuß entriegelt und sich mittels der beiden Lenker von der Basis entfernt und dabei das hintere Ende des Sitzkissens anhebt, während die Lehne unter Beibehaltung ihrer Neigung relativ zum hinteren Fuß vorschwenkt, und wobei die Schwinge nach vorne schwenkt und das vordere Ende des Sitzkissens absenkt.

Die US 2016/318424 A1 offenbart einen Fahrzeugsitz mit einem Sitzteil, einer Lehne, und einer Kinematik zur Überführung des Fahrzeugsitzes von einer zur Personenbeförderung geeigneten Gebrauchsstellung in eine Einstiegsstellung, wobei der Fahrzeugsitz mittels einer Antriebsvorrichtung von der Gebrauchsstellung in die Nichtgebrauchsstellung und umgekehrt überführbar ist, wobei der Fahrzeugsitz zur Sicherung in der Gebrauchsstellung einen hinteren Fuß mit einer Verriegelungsvorrichtung aufweist, welche mit einem Gegenelement verriegelbar ist. Der Fahrzeugsitz weist eine Schutzvorrichtung zur Erfassung eines Hindernisses in einer Bewegungsbahn des hinteren Fußes bei der Überführung des Fahrzeugsitzes von der Nichtgebrauchsstellung in die Einstiegsstellung auf, wobei die Schutzvorrichtung eine Blende mit einer Öffnung aufweist, welche, in montiertem Zustand der Blende, an einer Aufnahmeöffnung der Verriegelungsvorrichtung ausgerichtet ist, so dass das Gegenelement durch die Öffnung hindurch in die Aufnahmeöffnung der Verriegelungsvorrichtung einführbar ist.

### Aufgabe

Der Erfindung liegt die Aufgabe zu Grunde, einen Fahrzeugsitz eingangs genannter Art zu verbessern, insbesondere einen Fahrzeugsitz mit einem Einklemmschutz zur sicheren Vermeidung eines Einklemmfalls bereitzustellen.

### Lösung

Diese Aufgabe wird erfindungsgemäß gelöst, durch einen Fahrzeugsitz, insbesondere Kraftfahrzeugsitz, mit einem Sitzteil, einer Lehne, und einer Kinematik zur Überführung des Fahrzeugsitzes von einer zur Personenbeförderung geeigneten Gebrauchsstellung in eine Nichtgebrauchsstellung, insbesondere in eine den Einstieg in eine hintere Sitzreihe erleichternde Einstiegsstellung, wobei der Fahrzeugsitz mittels einer Antriebsvorrichtung von der Gebrauchsstellung in die Nichtgebrauchsstellung und umgekehrt überführbar ist, wobei der Fahrzeugsitz zur Sicherung in der Gebrauchsstellung einen hinteren Fuß mit einer Verriegelungsvorrichtung aufweist, welche mit einem Gegenelement verriegelbar ist, wobei der Fahrzeugsitz eine Schutzvorrichtung, insbesondere eine im Bereich der Verriegelungsvorrichtung angeordnete Schutzvorrichtung, zur Erfassung eines Hindernisses in einer Bewegungsbahn des hinteren Fußes bei der Überführung des Fahrzeugsitzes von der Nichtgebrauchsstellung in die Gebrauchsstellung aufweist.

Dadurch, dass der Fahrzeugsitz eine Schutzvorrichtung zur Erfassung eines Hindernisses in einer Bewegungsbahn des hinteren Fußes bei der Überführung des Fahrzeugsitzes von der Nichtgebrauchsstellung in die Gebrauchsstellung aufweist, kann ein Vorhandensein eines Hindernisses, insbesondere zwischen dem hinteren Fuß und dem Gegenelement, rechtzeitig erkannt werden und durch Stoppen der Überführung des Fahrzeugsitzes zurück in die Gebrauchsstellung eine Beschädigung des Hindernisses, insbesondere eines Transportguts, oder ein Einklemmen des Hindernisses, insbesondere eines Körperteils, beispielsweise eines Fußes, eines Insassen einer hinteren Sitzreihe, verhindert werden. Vorzugsweise ist die Schutzvorrichtung im Bereich der Verriegelungsvorrichtung angeordnet. Die Schutzvorrichtung kann an der Verriegelungsvorrichtung befestigt sein. Die Schutzvorrichtung kann den hinteren Fuß im Bereich der Verriegelungsvorrichtung abdecken.

Unter einer Nichtgebrauchsstellung im Sinne der Erfindung, kann eine Einstiegsstellung, insbesondere eine Easy-Entry-Stellung, in welcher der Fahrzeugsitz nach vorne verschwenkt ist, oder auch eine Ladestellung, in welcher der Fahrzeugsitz zur Maximierung eines Stauraums nach vorne verschwenkt ist, gemeint sein.

Die Schutzvorrichtung weist eine Blende auf. Die Blende kann der Abdeckung des hinteren Fußes, insbesondere im Bereich der Verriegelungsvorrichtung, dienen. Die Blende kann zwei parallel orientiere Wandabschnitte aufweisen. Die Blende weist eine Öffnung auf. Die Öffnung ist, in montiertem Zustand der Blende, an der Aufnahmeöffnung der Verriegelungsvorrichtung ausgerichtet, so dass das Gegenelement durch die Öffnung hindurch in die Aufnahmeöffnung der Verriegelungsvorrichtung einführbar ist. Das Gegenelement kann ein Bolzen sein.

An wenigstens einem Randabschnitt der Öffnung ist ein Tastelement angeordnet. Das Tastelement kann begrenzt, insbesondere geringfügig, schwenkbar an der Blende befestigt sein. Das Tastelement kann mittels eines Scharniers, insbesondere mittels eines Filmscharniers, an der Blende befestigt sein. Das Tastelement kann linear beweglich an der Blende gelagert sein. Das Tastelement kann bei einer Bewegung, insbesondere einem Verschwenken, aus einer Normalstellung des Tastelements heraus, auf einen Schalter wirken. Der Schalter kann an einer Innenseite des Wandabschnitts der Blende angeordnet sein.

Das Tastelement der an dem hinteren Fuß montierten Blende kann im Bereich der Verriegelungsvorrichtung, besonders im Bereich der Aufnahmeöffnung der Verriegelungsvorrichtung, angeordnet sein. Das Tastelement ist aus einer äußeren Oberfläche der Blende hervorstehend ausgestaltet. Das Tastelement ist bevorzugt in einer Vertikalrichtung aus einer äußeren Oberfläche der Blende hervorstehend ausgestaltet.

Das Tastelement kann während der Überführung des Fahrzeugsitzes von der Einstiegsstellung in die Gebrauchsstellung einer Erfassung eines Hindernisses zwischen der Verriegelungsvorrichtung und dem Gegenelement dienen. Das Hindernis kann eine Tasche, ein Schuh eines Insassen einer hinteren Sitzreihe, oder ein sonstiges Transportgut sein, welches im Fußraum der hinteren Sitzreihe abgestellt wurde.

Wenn das Tastelement aus der Normalstellung heraus verschwenkt ist, kann das Tastelement auf den Schalter wirken, welcher wiederum auf eine Antriebsvorrichtung zum Verschwenken des Fahrzeugsitzes wirkt, und die Überführung des Fahrzeugsitzes in die Gebrauchsstellung stoppt. Gegebenenfalls kann im Fall einer aufgrund eines erkannten Hindernisses abgestoppten Überführung des Fahrzeugsitzes in die Gebrauchsstellung eine Rücküberführung des Fahrzeugsitzes in die Einstiegsstellung auslösbar sein.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine perspektivische Ansicht eines erfindungsgemäßen Fahrzeugsitzes in einer Gebrauchsstellung,
- Fig. 2:: eine Seitenansicht des Fahrzeugsitzes von Fig. 1 in der Gebrauchsstellung, sowie überlagert in einer Einstiegsstellung,
- Fig. 3:: eine perspektivische Ansicht einer Schutzvorrichtung,
- Fig. 4:: ausschnittsweise eine Seitenansicht des Fahrzeugsitzes im Bereich eines hinteren Fußes während eines Übergangs von der Nichtgebrauchsstellung in die Gebrauchsstellung vor dem Auftreten eines zu vermeidenden Einklemmfalls,
- Fig. 5:: einen vergrößert dargestellten Ausschnitt aus Fig. 4 mit der Schutzvorrichtung in einem deaktivierten Zustand, und
- Fig. 6:: eine Fig. 5 entsprechende Darstellung mit der Schutzvorrichtung in einem aktivierten Zustand.

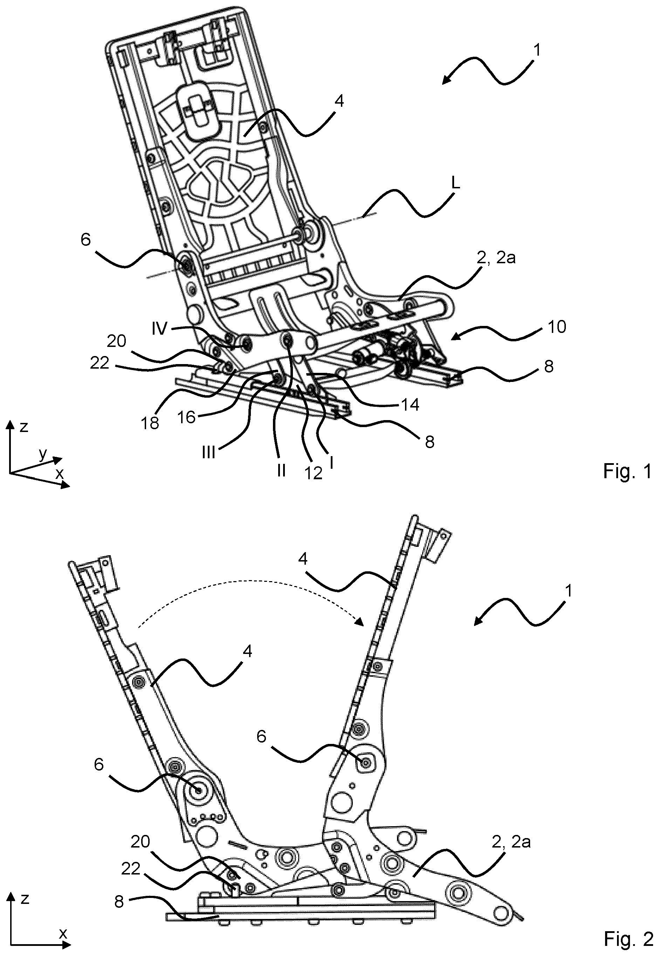

Der in Fig. 1 schematisch dargestellte Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsstellung mit aufrecht stehender Lehne 4 und wie üblich in Fahrtrichtung ausgerichtet ist.

Der Fahrzeugsitz 1 weist die Lehne 4 und ein Sitzteil 2 auf. Die Lehne 4 ist mittels wenigstens eines Beschlages 6, vorliegend zweier Beschläge 6, um eine Lehnenschwenkachse L in ihrer Neigung einstellbar, so dass mehrere Gebrauchsstellungen definiert sind. Unter dem Begriff Sitzteil 2 soll die gesamte Baugruppe, aufweisend eine Sitzteilstruktur 2a und ein bezogenes Polster, verstanden werden. Soweit Bauteile am Sitzteil 2 angelenkt sind, ist hierunter eine Anlenkung an der Sitzteilstruktur 2a, insbesondere einem Sitzrahmenseitenteil der Sitzteilstruktur 2a, des Sitzteils 2 zu verstehen. Entsprechendes gilt für die Lehne 4.

Die Figuren 1 und 2 zeigen einen erfindungsgemäßen Fahrzeugsitz 1. Im Folgenden wird der Einfachheit halber nur eine Fahrzeugsitzseite des im Wesentlichen symmetrischen Fahrzeugsitzes 1 beschrieben, d.h. die nachfolgend genannten Bauteile sind, wenn nicht abweichend beschrieben, doppelt (gegebenenfalls spiegelsymmetrisch) vorhanden. Zunächst wird der Fahrzeugsitz 1 anhand einer in Fig. 1 dargestellten speziellen Gebrauchsstellung, nämlich einer Designstellung, beschrieben, in welcher die Lehne 4 um beispielsweise 23° gegenüber der Vertikalen nach hinten geneigt ist.

Der Fahrzeugsitz 1 weist vorliegend zur Einstellung einer Sitzlängsposition einen Längseinsteller 8 auf. Ein solcher Längseinsteller ist beispielweise aus der DE 10 2010 010 585 B4 bekannt.

Eine Basis des Fahrzeugsitzes 1 ist mit der Struktur des Kraftfahrzeuges verbindbar. Die Basis ist vorliegend als Längseinsteller 8 ausgebildet, welcher die Möglichkeit einer Längseinstellung des Fahrzeugsitzes 1 eröffnet. Die Basis weist vorliegend eine direkt mit der Fahrzeugstruktur verbundene Bodenschiene und eine relativ zu dieser in Längsrichtung x verschiebbare Sitzschiene auf. Die beiden profilierten Schienen hintergreifen einander wechselseitig mit ihren nach innen bzw. nach außen gebogenen Längsrändern. Bevorzugt ist der Längseinsteller 8 in an sich bekannter Weise mittels eines Spindelantriebs in eine beliebige Längseinstellposition innerhalb eines vorgegebenen Einstellbereichs verfahrbar. Alternativ kann ebenso ein Längseinsteller vorgesehen sein, dessen Schienen mittels einer an sich bekannten Schienenverriegelung miteinander verriegelbar sind, wobei die Schienenverriegelung vom Insassen des Fahrzeugsitzes 1 mittels eines an sich bekannten Entriegelungsbügels manuell entriegelbar ist.

An der Basis ist ein vorderer Fuß 12 angebracht, und zwar vorliegend fest mit der Sitzschiene verbunden. Der vordere Fuß 12 kann alternativ auch lösbar mit der Basis, insbesondere der Sitzschiene, verriegelt sein.

Im Bereich eines vorderen Endes des vorderen Fußes 12 ist mittels einer Schwinge 14 das Sitzteil 2 angelenkt, wobei diese Schwinge 14 zwei Enden aufweist und im Bereich dieser beiden Enden jeweils ein Drehgelenk vorgesehen ist. Die Drehgelenke ermöglichen eine Bauteildrehung um jeweils eine vorliegend parallel zur Querrichtung y verlaufende Drehachse. Ein erstes Drehgelenk I bildet eine Anlenkung der Schwinge 14 am vorderen Fuß 12. Ein zweites Drehgelenk II bildet eine Anlenkung der Schwinge 14 am vorderen Ende des Sitzteils 2. Die Schwinge 14 der linken Fahrzeugsitzseite kann mit der Schwinge 14 der rechten Fahrzeugsitzseite über eine Querverbindung, vorliegend ein Querrohr, verbunden sein.

Das Sitzteil 2 ist ferner mittels eines hinter der Schwinge 14 angeordneten Lenkers 16 am vorderen Fuß 12 angelenkt. Der Lenker 16 weist zwei Enden auf, wobei im Bereich dieser beiden Enden jeweils ein Drehgelenk vorgesehen ist. Ein drittes Drehgelenk III bildet eine Anlenkung des Lenkers 16 am vorderen Fuß 12. Ein viertes Drehgelenk IV bildet eine Anlenkung des Lenkers 16 am Sitzteil 2. Auf beiden Seiten des Fahrzeugsitzes 1 ist genau ein solcher Lenker 16 entsprechend angeordnet. Der vordere Fuß 12, die Schwinge 14, der Lenker 16 und das Sitzteil 2 bilden eine Viergelenkanordnung.

Der Fahrzeugsitz 1 ist um die Viergelenkanordnung entlang einer vorgegebenen Bewegungsbahn von der Gebrauchsstellung, entsprechend dem in Fig. 2 links dargestellten Fahrzeugsitz 1, in die Einstiegsstellung, entsprechend dem in Fig. 2 rechts überlagert dargestellten Fahrzeugsitz 1, und zurück von der Einstiegsstellung in die Gebrauchsstellung bewegbar. Zur Überführung des Fahrzeugsitzes 1 von der Gebrauchsstellung in die Einstiegsstellung und zurück ist bevorzugt eine Antriebsvorrichtung vorgesehen. Die Antriebsvorrichtung ist bevorzugt elektronisch gesteuert.

An der Basis ist ferner in Längsrichtung x hinter dem vorderen Fuß 12 ein vom vorderen Fuß 12 gesondert ausgebildeter hinterer Fuß 18 angeordnet. Der hintere Fuß 18 der linken Fahrzeugsitzseite ist mit dem hinteren Fuß 18 der rechten Fahrzeugsitzseite über eine Querverbindung verbunden.

Der hintere Fuß 18 der linken Fahrzeugsitzseite ist weitgehend spiegelsymmetrisch zu dem hinteren Fuß 18 der rechten Fahrzeugsitzseite, so dass nachfolgend nur ein hinterer Fuß 18 beschrieben ist. Der hintere Fuß 18 ist mittels einer am hinteren Fuß 18 angeordneten Verriegelungsvorrichtung 20 lösbar mit der Basis verriegelbar, genauer gesagt mit einem basisfesten Gegenelement 22, vorliegend einem an der Sitzschiene befestigten Bolzen, und ist damit indirekt mit der Fahrzeugstruktur verbindbar. Das Gegenelement 22 ist in einem mit der Verriegelungsvorrichtung 20 verriegelten Zustand in einer schlitzartigen Aufnahmeöffnung des hinteren Fußes 18 oder alternativ eines Gehäuses der Verriegelungsvorrichtung 20 zentriert und wird durch eine Klinke der Verriegelungsvorrichtung 20 am Verlassen der Aufnahmeöffnung gehindert. Die Aufnahmeöffnung weist eine V-förmige Kontur auf und ist in Richtung der Basis geöffnet. Die Aufnahmeöffnung läuft in einer von der Basis weg orientierten Richtung konisch zu. In der Gebrauchsstellung des Fahrzeugsitzes 1 fixieren die Aufnahmeöffnung und die Klinke der Verriegelungsvorrichtung 20 den hinteren Fuß 18 relativ zur Basis.

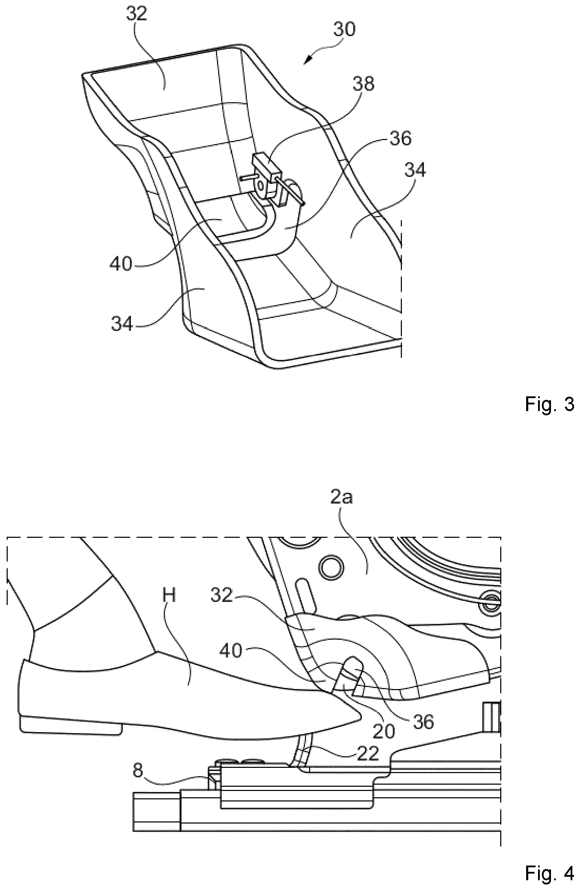

Fig. 3 zeigt eine Schutzvorrichtung 30, aufweisend eine Blende 32. Die Blende 32 dient der Abdeckung des hinteren Fußes 18 im Bereich der Verriegelungsvorrichtung 20. Die Blende 32 weist zwei, insbesondere parallel orientiere, Wandabschnitte 34 auf. Die Blende 32 weist eine Öffnung 36 auf. Die Öffnung 36 ist in einem montierten Zustand der Blende 32 derart an der Aufnahmeöffnung der Verriegelungsvorrichtung 20 ausgerichtet, dass das Gegenelement 22 durch die Öffnung 36 hindurch in die Aufnahmeöffnung der Verriegelungsvorrichtung 20 einführbar ist. An wenigstens einem Randabschnitt der Öffnung 36 ist ein Tastelement 40 angeordnet. Das Tastelement 40 ist begrenzt schwenkbar an der Blende 32 befestigt. Das Tastelement 40 ist vorzugsweise mittels eines Scharniers, insbesondere eines Filmscharniers, an der Blende 32 befestigt. Das Tastelement 40 wirkt bei einem Verschwenken aus einer Normalstellung des Tastelements 40 heraus auf einen Schalter 38, welcher vorliegend an einer Innenseite des Wandabschnitts 34 angeordnet ist.

Die Blende 32 ist am hinteren Fuß 18 montiert. Das Tastelement 40 der an dem hinteren Fuß 18 montierten Schutzvorrichtung 30 ist im Bereich der Verriegelungsvorrichtung 20, insbesondere im Bereich der Aufnahmeöffnung der Verriegelungsvorrichtung 20, angeordnet.

Das Tastelement 40 dient, wie in Fig. 4 gezeigt, während der Überführung des Fahrzeugsitzes 1 von der Einstiegsstellung in die Gebrauchsstellung einer Erfassung eines Hindernisses H zwischen der Verriegelungsvorrichtung 20 und dem Gegenelement 22. Das Hindernis H ist vorliegend beispielhaft durch den Schuh eines in einer hinteren Sitzreihe sitzenden Insassen dargestellt. Das Hindernis H kann gleichfalls eine Tasche oder ein sonstiges Transportgut sein, welches im Fußraum der hinteren Sitzreihe abgestellt wurde.

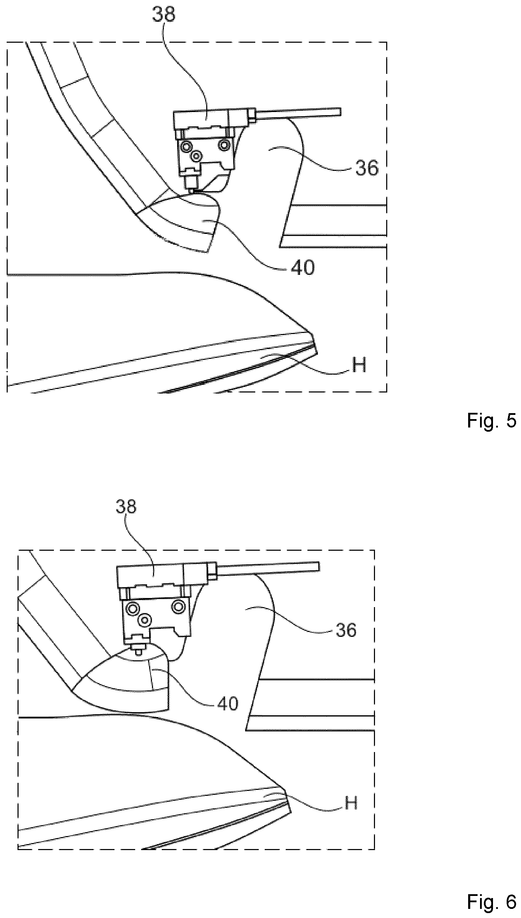

Die Figuren 5 und 6 zeigen den Fahrzeugsitz 1 im Bereich der Schutzvorrichtung 30 während der Überführung des Fahrzeugsitzes 1 von der Einstiegsstellung in die Gebrauchsstellung, kurz vor Erreichen der Gebrauchsstellung.

In Fig. 5 befindet sich das Tastelement 40 noch in der Normalstellung, in welcher der Schalter 38 nicht betätigt ist.

In Fig. 6 ist der Fahrzeugsitz 1 etwas weiter in Richtung der Gebrauchsstellung verfahren. Das Tastelement 40 ist in Kontakt mit dem in der Bewegungsbahn des hinteren Fußes 18 des Fahrzeugsitz 1 befindlichen Hindernis H gelangt. Das Hindernis H ist zwischen dem Gegenelement 22 und dem Tastelement 40 angeordnet und das Tastelement 40 wurde durch die fortgeführte Bewegung des Fahrzeugsitzes 1 in Richtung der Gebrauchsstellung aus der Normalstellung des Tastelements 40 heraus verschwenkt. Dadurch wirkt das Tastelement 40 auf den Schalter 38, welcher wiederum auf eine Antriebsvorrichtung zum Verschwenken des Fahrzeugsitzes 1 derart wirkt, dass die Überführung des Fahrzeugsitzes 1 in die Gebrauchsstellung stoppt und somit einen Einklemmfall, bei dem eine hohe Kraft auf das Hindernis H wirken würde, vermeidet. Gegebenenfalls kann eine Rücküberführung des Fahrzeugsitzes 1 in die Einstiegsstellung ausgelöst werden.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand zum Schutzumfang der Erfindung gehört, der durch die Ansprüche definiert ist.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 2a: Sitzteilstruktur
- 4: Lehne
- 6: Beschlag
- 8: Längseinsteller
- 10: Kinematik
- 12: vorderer Fuß
- 14: Schwinge
- 16: Lenker
- 18: hinterer Fuß
- 20: Verriegelungsvorrichtung
- 22: Gegenelement
- 30: Schutzvorrichtung
- 32: Blende
- 34: Wandabschnitt
- 36: Öffnung
- 38: Schalter
- 40: Tastelement
- H: Hindernis
- L: Lehnenschwenkachse
- I: erstes Drehgelenk
- II: zweites Drehgelenk
- III: drittes Drehgelenk
- IV: viertes Drehgelenk
- x: Längsrichtung
- y: Querrichtung
- z: Vertikalrichtung

## Patentansprüche

1. Fahrzeugsitz (1), insbesondere Kraftfahrzeugsitz, mit einem Sitzteil (2), einer Lehne (4), und einer Kinematik (10) zur Überführung des Fahrzeugsitzes (1) von einer zur Personenbeförderung geeigneten Gebrauchsstellung in eine Nichtgebrauchsstellung, insbesondere in eine den Einstieg in eine hintere Sitzreihe erleichternde Einstiegsstellung, wobei der Fahrzeugsitz (1) mittels einer Antriebsvorrichtung von der Gebrauchsstellung in die Nichtgebrauchsstellung und umgekehrt überführbar ist, wobei der Fahrzeugsitz (1) zur Sicherung in der Gebrauchsstellung einen hinteren Fuß (18) mit einer Verriegelungsvorrichtung (20) aufweist, welche mit einem Gegenelement (22) verriegelbar ist,
wobei der Fahrzeugsitz (1) eine Schutzvorrichtung (30), insbesondere eine im Bereich der Verriegelungsvorrichtung (20) angeordnete Schutzvorrichtung (30), zur Erfassung eines Hindernisses (H) in einer Bewegungsbahn des hinteren Fußes (18) bei der Überführung des Fahrzeugsitzes (1) von der Nichtgebrauchsstellung in die Gebrauchsstellung aufweist,
wobei die Schutzvorrichtung (30) eine Blende (32) aufweist,
wobei die Blende (32) eine Öffnung (36) aufweist, welche, in montiertem Zustand der Blende (32), an einer Aufnahmeöffnung der Verriegelungsvorrichtung (20) ausgerichtet ist, so dass das Gegenelement (22) durch die Öffnung (36) hindurch in die Aufnahmeöffnung der Verriegelungsvorrichtung (20) einführbar ist,
**dadurch gekennzeichnet, dass**
an wenigstens einem Randabschnitt der Öffnung (36) ein Tastelement (40) angeordnet ist, wobei das Tastelement (40) aus einer äußeren Oberfläche der Blende (32) hervorstehend ausgestaltet ist.

2. Fahrzeugsitz (1) gemäß Anspruch 1, wobei die Blende (32) als eine Abdeckung des hinteren Fußes (18), insbesondere im Bereich der Verriegelungsvorrichtung (20), dient.

3. Fahrzeugsitz (1) gemäß Anspruch 1 oder 2, wobei das Gegenelement (22) ein Bolzen ist.

4. Fahrzeugsitz (1) gemäß einem der Ansprüche 1 bis 3, wobei das Tastelement (40) in einer Vertikalrichtung (z) aus der äußeren Oberfläche der Blende (32) hervorstehend ausgestaltet ist.

5. Fahrzeugsitz (1) gemäß einem der Ansprüche 1 bis 4, wobei das Tastelement (40) begrenzt schwenkbar an der Blende (32) befestigt ist.

6. Fahrzeugsitz (1) gemäß einem der Ansprüche 1 bis 5, wobei das Tastelement (40) mittels eines Scharniers an der Blende (32) befestigt ist.

7. Fahrzeugsitz (1) gemäß Anspruch 6, wobei das Tastelement (40) mittels eines Filmscharniers an der Blende (32) befestigt ist.

8. Fahrzeugsitz (1) gemäß einem der Ansprüche 1 bis 5, wobei das Tastelement (40) linear beweglich an der Blende (32) gelagert ist.

9. Fahrzeugsitz (1) gemäß einem der Ansprüche 1 bis 8, wobei das Tastelement (40) bei einer Bewegung, aus einer Normalstellung des Tastelements (40) heraus, auf einen Schalter (38) wirkt.

10. Fahrzeugsitz (1) gemäß Anspruch 9, wobei der Schalter (38) an der Blende (32), insbesondere einer Innenseite eines Wandabschnitts (34) der Blende (32), angeordnet ist.

11. Fahrzeugsitz (1) gemäß einem der Ansprüche 1 bis 10, wobei das Tastelement (40), während der Überführung des Fahrzeugsitzes (1) von der Einstiegsstellung in die Gebrauchsstellung, einer Erfassung eines Hindernisses (H) zwischen der Verriegelungsvorrichtung (20) und dem Gegenelement (22) dient.

## Claims

1. Vehicle seat (1), in particular motor-vehicle seat, having a seat part (2), having a backrest (4), and having a kinematics mechanism (10) for transferring the vehicle seat (1) from a use position, in which the vehicle seat is suitable for transporting persons, into a not-in-use position, in particular into an access position, which facilitates access to a rear row of seats, wherein the vehicle seat (1) is able to be transferred from the use position into the not-in-use position, and vice versa, by a drive device, wherein, for securing purposes in the use position, the vehicle seat (1) has a rear foot (18) with a locking device (20), which is able to be locked to a counterpart element (22),
wherein the vehicle seat (1) has a protective device (30), in particular a protective device (30) arranged in the region of the locking device (20), for the purpose of detecting an obstruction (H) in a movement path of the rear foot (18) when the vehicle seat (1) is being transferred from the not-in-use position into the use position,
wherein the protective device (30) has a panel (32), wherein the panel (32) has an opening (36) which, in the fitted state of the panel (32), is aligned with a receiving opening of the locking device (20), so that the counterpart element (22) is able to be introduced into the receiving opening of the locking device (20) through the opening (36), **characterized in that**
a contact element (40) is arranged on at least one edge portion of the opening (36), wherein the contact element (40) is configured so as to project from an outer surface of the panel (32).

2. Vehicle seat (1) according to Claim 1, wherein the panel (32) serves as a cover for the rear foot (18), in particular in the region of the locking device (20) .

3. Vehicle seat (1) according to Claim 1 or 2, wherein the counterpart element (22) is a bolt.

4. Vehicle seat (1) according to one of Claims 1 to 3, wherein the contact element (40) is configured so as to project from the outer surface of the panel (32) in a vertical direction (z).

5. Vehicle seat (1) according to one of Claims 1 to 4, wherein the contact element (40) is fastened to the panel (32) so as to be pivotable to a limited extent.

6. Vehicle seat (1) according to one of Claims 1 to 5, wherein the contact element (40) is fastened to the panel (32) by a hinge.

7. Vehicle seat (1) according to Claim 6, wherein the contact element (40) is fastened to the panel (32) by a film hinge.

8. Vehicle seat (1) according to one of Claims 1 to 5, wherein the contact element (40) is mounted on the panel (32) in a linearly movable manner.

9. Vehicle seat (1) according to one of Claims 1 to 8, wherein, when moving out of a normal position of the contact element (40), the contact element (40) acts on a switch (38).

10. Vehicle seat (1) according to Claim 9, wherein the switch (38) is arranged on the panel (32), in particular an inner side of a wall portion (34) of the panel (32).

11. Vehicle seat (1) according to one of Claims 1 to 10, wherein the contact element (40) serves, when the vehicle seat (1) is being transferred from the access position into the use position, to detect an obstruction (H) between the locking device (20) and the counterpart element (22).

## Revendications

1. Siège de véhicule (1), en particulier siège de véhicule automobile, comportant une partie d'assise (2), un dossier (4) et un mécanisme cinématique (10) servant au transfert du siège de véhicule (1) d'une position d'utilisation appropriée au transport de personnes à une position de non-utilisation, en particulier à une position d'entrée facilitant l'entrée dans une rangée de sièges arrière, le siège de véhicule (1) pouvant être transféré de la position d'utilisation à la position de non-utilisation et inversement au moyen d'un dispositif d'entraînement, le siège de véhicule (1) présentant, pour le blocage dans la position d'utilisation, un pied arrière (18) comportant un dispositif de verrouillage (20), lequel peut être verrouillé à l'aide d'un élément conjugué (22),
le siège de véhicule (1) présentant un dispositif de protection (30), en particulier un dispositif de protection (30) disposé dans la région du dispositif de verrouillage (20), pour la détection d'un obstacle (H) dans un trajet de déplacement du pied arrière (18) lors du transfert du siège de véhicule (1) de la position de non-utilisation à la position d'utilisation,
le dispositif de protection (30) présentant un panneau (32),
le panneau (32) présentant une ouverture (36), laquelle, dans l'état monté du panneau (32), est alignée sur une ouverture de réception du dispositif de verrouillage (20), de sorte que l'élément conjugué (22) puisse être introduit à travers l'ouverture (36) dans l'ouverture de réception du dispositif de verrouillage (20), **caractérisé en ce**
**qu'**un élément palpeur (40) est disposé au niveau d'au moins une partie de bord de l'ouverture (36), l'élément palpeur (40) étant configuré de manière à faire saillie à partir d'une surface extérieure du panneau (32).

2. Siège de véhicule (1) selon la revendication 1, le panneau (32) servant de recouvrement du pied arrière (18), en particulier dans la région du dispositif de verrouillage (20).

3. Siège de véhicule (1) selon la revendication 1 ou 2, l'élément conjugué (22) étant un boulon.

4. Siège de véhicule (1) selon l'une des revendications 1 à 3, l'élément palpeur (40) étant configuré de manière à faire saillie à partir de la surface extérieure du panneau (32) dans une direction verticale (z).

5. Siège de véhicule (1) selon l'une des revendications 1 à 4, l'élément palpeur (40) étant fixé au panneau (32) de manière à pouvoir pivoter de façon limitée.

6. Siège de véhicule (1) selon l'une des revendications 1 à 5, l'élément palpeur (40) étant fixé au panneau (32) au moyen d'une charnière.

7. Siège de véhicule (1) selon la revendication 6, l'élément palpeur (40) étant fixé au panneau (32) au moyen d'une charnière-film.

8. Siège de véhicule (1) selon l'une des revendications 1 à 5, l'élément palpeur (40) étant fixé au panneau (32) de manière mobile linéairement.

9. Siège de véhicule (1) selon l'une des revendications 1 à 8, l'élément palpeur (40), lors d'un mouvement hors d'une position normale de l'élément palpeur (40), agissant sur un commutateur (38).

10. Siège de véhicule (1) selon la revendication 9, le commutateur (38) étant disposé sur le panneau (32), en particulier un côté intérieur d'une partie de paroi (34) du panneau (32).

11. Siège de véhicule (1) selon l'une des revendications 1 à 10, l'élément palpeur (40), pendant le transfert du siège de véhicule (1) de la position d'entrée à la position d'utilisation, servant à une détection d'un obstacle (H) entre le dispositif de verrouillage (20) et l'élément conjugué (22).
